# EUROPÄISCHE PATENTSCHRIFT

(11) **EP 2 454 514 B1**
(45) Veröffentlichungstag und Bekanntmachung des Hinweises auf die Patenterteilung: **11.09.2013**
(21) Anmeldenummer: 10730375.2
(22) Anmeldetag: 03.07.2010
(51) Int. Cl.: F16L 37/098

(54) **STECKKUPPLUNG**
PLUG-IN CONNECTOR
ACCOUPLEMENT ENFICHABLE

(30) Priorität: 14.07.2009 DE 102009033943
(43) Veröffentlichungstag der Anmeldung: 23.05.2012
(73) Patentinhaber: Aft Automotive GmbH&Co. Kg, 48356 Nordwalde (DE); Volkswagen Aktiengesellschaft, 38440 Wolfsburg (DE)
(72) Erfinder: CICHOREK, Hermann, 37434 Gieboldehausen (DE); KRAMER, Dirk, 48329 Havixbeck, OT Hohenholte (DE); CELOVIC, Sevket, 38446 Wolfsburg (DE); LAUMANN, Alfons, 38518 Gifhorn (DE)
(74) Vertreter: Grosse, Rainer
(86) Internationale Anmeldenummer: PCT/EP2010/004027
(87) Internationale Veröffentlichungsnummer: WO 2011/006591

(56) Entgegenhaltungen:
- EP-A1- 0 465 896
- EP-A2- 0 280 180
- DE-A1- 19 831 897
- DE-A1-102004 053 541
- DE-C1- 19 735 491
- US-A- 5 496 074

## Beschreibung

Die Erfindung betrifft eine Steckkupplung zum lösbaren Verbinden zweier Leitungen, mit einem ersten Kupplungsglied, einem zweiten Kupplungsglied, einem an dem ersten Kupplungsglied befestigbaren Trägerelement und einem mindestens einen Rastarm aufweisenden, an dem Trägerelement angeordneten Rastelement, wobei der Rastarm in einer Raststellung zum rastenden Halten des ein Rastgegenelement aufweisenden zweiten Kupplungsglieds ausgebildet ist und das Rastelement in axialer Richtung zum Einnehmen zumindest einer Rastarmsicherungs- und einer Rastarmfreigabestellung zu dem Trägerelement verschieblich angeordnet ist.

Steckkupplungen der eingangs genannten Art sind aus dem Stand der Technik bekannt. Beispielsweise beschreibt die EP 0 465 896 B1 ein Verbindungselement für Wellrohre und Schläuche mit parallel gewellter Schlauchwand, wobei das Verbindungselement ein annähernd zylindrisches Gehäuse mit einem Anschlussstück sowie in der Gehäusewand mehrere, fensterartige Öffnungen sowie einen am Gehäuse anlegbaren Tragring mit einer stirnseitigen Ringfläche und mit Schenkeln und Verriegelungsteilen an deren freien Enden umfasst. Es ist vorgesehen, dass der Tragring in Form einer Schiebemuffe aus einem Anschlagring, einem axial im Abstand dazu angeordneten Innenring, den Anschlagring und den Innenring verbindenden Stegen sowie sich vom Innenring zum Anschlagring hin erstreckenden Schenkeln mit den Verriegelungskrallen an deren freien Enden besteht. Gemäß dem Ausführungsbeispiel sind dabei zwei gegenüberliegende Rastelemente vorgesehen, die ein Rastgegenelement - eine umlaufende Rippe - eines Stutzens umgreifen und diesen rastend halten. Die Rastarme sind an einem ringförmigen Rastelement vorgesehen und über dieses miteinander verbunden. Zum Lösen der Verbindung, das heißt der beiden Kupplungsglieder voneinander, muss die erwähnte Schiebemuffe axial verlagert werden, sodass das Rastelement beziehungsweise die daran befestigten Rastarme in eine Rastarmfreigabestellung gelangen. Sobald das Rastelement in der Rastarmfreigabestellung vorliegt, können die beiden Kupplungsglieder durch kräftiges Ziehen in axialer Richtung voneinander getrennt werden, wobei die Rastarme durch dieses Ziehen in radialer Richtung nach außen gedrückt werden, sodass sie in einer Trennstellung vorliegen. Konstruktionsbedingt können die Rastarme jeweils nur einen kleinen Winkelbereich (in Umfangsrichtung) des Rastgegenelements umfassen. Dies reduziert die Zuverlässigkeit der Steckkupplung speziell bei einem Aufbringen von seitlicher Last, wie sie beispielsweise bei einem Unfall eines Kraftfahrzeugs auftreten kann. Darüber hinaus kann konstruktionsbedingt das zweite Kupplungsglied, welches mittels der Rastarme gehalten ist, auch unter Zugbelastung (also während eines Betriebs) durch axiales Verlagern der Schiebemuffe von dem ersten Kupplungsglied gelöst werden. Dies stellt eine weitere Gefahrenquelle bei einem Unfall dar, da unter Umständen ein unbeabsichtigtes Lösen der Verbindung auftreten kann.

Eine weitere, ähnliche Steckkupplung zeigt die DE 198 31 897 C2. Hier ist eine Steckkupplung zum Verbinden zweier Fluidleitungen vorgestellt, wobei die eine Fluidleitung eine Halterippe aufweist. Die Steckkupplung verfügt über eine Hülse und über eine in der Hülse axial verschiebbar geführte Rasteinrichtung, die an einem Ring sich axial erstreckende und elastisch biegsame Haltearme mit einem am freien Ende ausgebildeten Haken zum Hintergreifen der Halterippe aufweist. Ein Entkuppeln der beiden Fluidleitungen ist vorgesehen, indem die Haltearme in eine axial zurückgezogene Entriegelungslage der Rasteinrichtung gebracht werden, in welcher die Haken mit einer radial äußeren Schrägfläche nicht gegen eine vordere Kante eines Durchbruchs gedrückt sind und radial nach außen gespreizt werden können. Das Verlagern der Haltearme in die Entriegelungslage wird durch radiales Zusammendrücken von Teilen der Entriegelungsarme bewirkt, wobei sie über Schrägflächen abgleiten. Es liegt also eine Steckkupplung vor, bei welcher Rastarme eine umlaufende Rippe - das Rastgegenelement - des zweiten Kupplungsglieds zumindest teilweise umgreifen.

Zum Lösen der Steckkupplung wird eine Kraft in radialer Richtung nach innen auf zumindest einen der Rastarme aufgebracht, wodurch das Rastelement in axialer Richtung nach hinten verlagert wird. Dadurch wird das Rastelement in die Rastarmfreigabestellung verlagert. Das Aufbringen der Kraft kann beispielsweise durch Drücken mittels Daumen und Zeigefinger einer Hand erfolgen. In der Rastarmfreigabestellung, auch als Entriegelungslage bezeichnet, können die Rastarme durch axiales Auseinanderziehen der Leitungen beziehungsweise der Kupplungsglieder derart gespreizt werden, dass danach durch weiteres axiales Auseinanderziehen der Leitungen diese voneinander getrennt werden können. Zum Verlagern des Rastelements in die Rastarmfreigabestellung genügt es, einen der Rastarme zu betätigen.

Steckkupplungen dieser Art werden in der Regel von Hand montiert und gelöst, wobei bestimmte Montage- beziehungsweise Demontagekräfte nicht überschritten werden dürfen. Einerseits müssen die Rastarme das Rastgegenelement möglichst derart halten, dass sie bei einer axialen Verlagerung des zweiten Kupplungsglieds relativ zum ersten Kupplungsglied (von diesem weg) in die Raststellung bewegt beziehungsweise in diese hineingedrängt werden. Andererseits muss sich die Steckkupplung im Demontagefall leicht lösen lassen. Dies zwingt bei der Auslegung der Rastarme zu Kompromissen. Insbesondere dürfen die Vorspannkräfte der Rastarme nicht zu hoch sein.

Die an den Rastarmen vorgesehenen Rastnasen dürfen dazu das Rastgegenelement des zweiten Kupplungsglieds nicht vollständig umschließen. Vielmehr muss durch Rundungen oder Schrägflächen an einer Innenseite der Rastnasen beziehungsweise der Rastarme sichergestellt sein, dass bei einem Öffnen der Steckkupplung durch das axiale Auseinanderziehen der Kupplungsglieder beziehungsweise der Leitungen die Rastarme ohne großen Widerstand radial nach außen verlagert werden können. Allerdings reichen bereits kleine äußere Einflüsse, die beispielsweise durch Verklemmen oder Festfrieren verursacht sein können, aus, um das Rastelement in seiner Rastarmfreigabestellung verharren zu lassen. Dies kann zu einem unbeabsichtigten Lösen der Steckkupplung durch Ziehen an einem der Kupplungsglieder führen. Insbesondere auch bei Auftreten von starken Vibrationen beziehungsweise bei einem Unfall kann es zu einem unbeabsichtigten Verlagern des Rastelements und damit zu einem Lösen der Verbindung kommen.

Bedingt durch die relativ geringe Haltekraft, die notwendig ist, um das Rastelement in der Rastarmfreigabestellung zu halten, ist es auch nicht möglich, ohne großen konstruktiven Aufwand eine Steckkupplung zu realisieren, welche nur durch Betätigen von mindestens zwei Rastarmen geöffnet werden kann. Selbst wenn die aus dem Stand der Technik bekannten Steckkupplungen mit mehreren, insbesondere zwei gegenüberliegenden Rastarmen beziehungsweise Bedienelementen versehen sind, reicht üblicherweise die Betätigung eines Rastarms beziehungsweise Bedienelement aus, um das Rastelement in die Rastarmfreigabestellung zu verschieben und damit ein Lösen der Verbindung, welche mittels der Steckkupplung hergestellt ist, zu ermöglichen. Dies ist beispielsweise bei einem Unfall kritisch zu sehen, da dabei die Steckkupplung gegen ein benachbartes Bauteil gedrückt werden kann, wodurch es zu einem Betätigen des Rastarms beziehungsweise des Bedienelements und damit zu einem Lösen der Verbindung kommen kann.

Bei der Steckkupplung, wie sie in der DE 198 31 897 C2 beschrieben ist, tritt außerdem der Nachteil auf, dass ein Bereich des axial verschiebbaren Rastelements in ein Gehäuse der Steckkupplung eintaucht und zum Halten von Dichtelementen dient. Da das Rastelement axial beweglich sein muss, liegt ein Spiel sowohl zu dem Kupplungsglied als auch zu dem Gehäuse vor. Bei Seitenbelastung der Steckkupplung beziehungsweise eines der Kupplungsglieder ergibt daraus sich eine unsymmetrische Belastung auf die Dichtelemente, was Undichtigkeiten der Verbindung verursachen kann.

Weitere Steckkupplungen mit den Merkmalen gemäß des Oberbegriffs von Anspruch 1 sind bekannt aus US 5,496,074 DE 10 2004 053 541 A1 sowie EP 0 280 180 A2.

Es ist daher Aufgabe der Erfindung, eine Steckkupplung zum lösbaren Verbinden zweier Leitungen vorzuschlagen, welche die eingangs genannten Nachteile nicht aufweist, sondern insbesondere ein Lösen der Verbindung lediglich zulässt, wenn das Rastelement zuvor bewusst in die Rastarmfreigabestellung bewegt wurde.

Dies wird erfindungsgemäß mit einer Steckkupplung mit den in Anspruch 1 genannten Merkmalen erreicht. Dabei ist vorgesehen, dass, insbesondere an dem Trägerelement, ein in der Rastarmfreigabestellung zur Verlagerung des Rastarms in eine Trennstellung betätigbares Bedienelement vorgesehen ist, welches bei Betätigung in der Rastarmsicherungsstellung das Rastelement in der Rastarmsicherungsstellung hält. Mittels der beschriebenen Steckkupplung können zwei Leitungen lösbar verbunden werden. Dazu weist die Steckkupplung das erste Kupplungsglied und das zweite Kupplungsglied auf - die zum Beispiel jeweils nach der SAE-Norm (SAE: Society of Automotive Engineers) ausgebildet sind -, die jeweils einer der beiden Leitungen zugeordnet sind. An dem ersten Kupplungsglied ist das Trägerelement befestigbar, an welchem das Rastelement angeordnet ist. Das Rastelement weist den mindestens einen Rastarm auf, der mit einem Rastgegenelement (beispielsweise einer Halterippe) des zweiten Kupplungsglieds zusammenwirkt, um dieses rastend zu halten, wenn sich der Rastarm in der Raststellung befindet. Soll die Verbindung gelöst werden, so ist das Rastelement in axialer Richtung zu verlagern, wobei es die Rastarmsicherungsstellung und die Rastarmfreigabestellung einnehmen kann. Das Verlagern erfolgt relativ zu dem Trägerelement.

In der Rastarmsicherungsstellung sind die Rastarme derart gesichert, dass sie das Rastgegenelement des zweiten Kupplungsglieds nicht freigeben und dies somit nicht von dem ersten Kupplungsglied getrennt werden kann. In der Rastarmfreigabestellung sind die Rastarme hingegen insbesondere in radialer Richtung durch Betätigung des Bedienelements elastisch auslenkbar, sodass das zweite Kupplungsglied durch axiales Verlagern von dem ersten Kupplungsglied getrennt werden kann. Durch das Betätigen des Bedienelements wird der Rastarm in die Trennstellung verlagert, in welcher das zweite Kupplungsglied von dem ersten Kupplungsglied getrennt werden kann. Es muss also zunächst das Rastelement axial verschoben werden, sodass es in die Rastarmfreigabestellung gelangt. Anschließend muss das Bedienelement betätigt werden, um den Rastarm in die Trennstellung zu bringen. Nur bei Vorliegen des Rastelements in der Rastarmfreigabestellung kann der Rastarm durch Betätigung des Bedienelements in die Trennstellung gelangen, welche zum Lösen der Verbindung notwendig ist. Somit ist kein unbeabsichtigtes Lösen der Verbindung möglich, sondern es ist stets ein aktives Eingreifen des Nutzers notwendig, der bewusst die beiden zum Lösen der Verbindung notwendigen Schritte durchführen muss. Bei einer Betätigung des Bedienelements in der Rastarmsicherungsstellung verleibt das Rastelement in der Rastarmsicherungsstellung oder wird sogar in dieser gehalten oder in diese gedrängt.

Zusätzlich ist vorgesehen, dass bei Betätigung des Bedienelements das Rastelement in der Rastarmsicherungsstellung gehalten ist beziehungsweise in diese gedrängt wird, wenn das Bedienelement betätigt wird, während sich das Rastelement in der Rastarmsicherungsstellung befindet. Es sind also stets zwei Schritte zum Lösen der Verbindung beziehungsweise der Steckkupplung notwendig. Das axiale Verschieben des Rastelements kann dabei beispielsweise derart erfolgen, dass das zweite Kupplungsglied mit dem Rastelement zusammenwirkt, um es bei einem axialen Verlagern des zweiten Kupplungsglieds in Richtung des ersten Kupplungsglieds in Richtung der Rastarmfreigabestellung zu verlagern. Lediglich ein Betätigen des Bedienelements kann das Rastelement nicht in die Rastarmfreigabestellung bringen und somit nicht zu einem Lösen der Verbindung führen.

Es ist also eine Steckkupplung realisiert, bei welcher der Rastarm nur in der Rastarmfreigabestellung des Rastelements durch Betätigung des mindestens einen Bedienelements in die Trennstellung bringbar ist. Das Bedienelement kann beispielsweise dem Trägerelement zugeordnet beziehungsweise an diesem befestigt sein. Das Bedienelement kann auch erst zum Lösen der Verbindung mit der Steckkupplung in Verbindung gebracht werden. Dazu wird es beispielsweise durch eine Ausnehmung in dem Trägerelement zur Verlagerung des Rastarms eingebracht. Die Verbindung der beiden Leitungen beziehungsweise der Kupplungsglieder kann bei einer solchen Steckkupplung nicht durch versehentliches Betätigen des Bedienelements gelöst werden, wodurch eine sehr sichere und zuverlässige Verbindung der beiden Leitungen erreicht ist. Dabei ist die mittels der Steckkupplung hergestellte Verbindung der beiden Leitungen selbsthemmend, ein bloßes Verlagern der Kupplungsglieder in axialer Richtung zueinander - ohne Vorliegen der Rastarmfreigabestellung und Betätigen des Bedienelements - führt also lediglich dazu, dass der Rastarm in Richtung des Rastgegenelements gedrängt wird, sodass die Verbindung umso sicherer gehalten wird.

Weitere vorteilhafte Ausgestaltungen ergeben sich aus den Unteransprüchen.

Eine Weiterbildung der Erfindung sieht vor, dass die Rastarmfreigabestellung eine Eingriffsstellung, in welcher das Bedienelement mit dem mindestens einen Rastarm zusammenwirkt, und die Rastarmsicherungsstellung eine Nichteingriffsstellung ist. Dabei ist das Bedienelement dem Trägerelement zugeordnet. Durch das axiale Verschieben des Rastelements bezüglich des Trägerelements wird erreicht, dass in der Rastarmsicherungsstellung das Bedienelement mit dem Rastarm zusammenwirken kann, um diesen in die Trennstellung zu verlagern. Dahingegen ist dies in der Rastarmsicherungsstellung gerade nicht vorgesehen. Hier liegt also die Nichteingriffsstellung vor, sodass das Bedienelement nicht mit den Rastarmen zusammenwirken kann. In der Eingriffsstellung können beispielsweise Eingriffselemente des Bedienelements mit Eingriffsgegenelementen des Rastarms zusammenwirken.

Eine Weiterbildung der Erfindung sieht vor, dass das Rastelement mindestens ein Anschlagelement aufweist, welches mit dem Rastgegenelement zum Verlagern des Rastelements in Rastarmfreigabestellung zusammenwirkt. Es ist somit nicht nur vorgesehen, dass der Rastarm mit dem Rastgegenelement zusammenwirkt, sondern es liegt zusätzlich das Anschlagelement vor. Dabei kann das Anschlagelement beispielsweise auf der dem Rastarm abgewandten Seite des Rastgegenelements an diesem angreifen. Mittels des Anschlagelements kann erreicht werden, dass das Rastelement bei einem Verlagern des zweiten Kupplungsglieds in Richtung des ersten Kupplungsglieds das Rastelement in Richtung der Rastarmfreigabestellung bewegt beziehungsweise tatsächlich in diese verlagert wird. Somit ist ein Lösen der Verbindung der beiden Leitungen einfach möglich, indem die beiden Kupplungsglieder in axialer Richtung aufeinander zu verlagert werden und bei Erreichen der Rastarmfreigabestellung durch das Rastelement das Bedienelement betätigt wird. Anschließend können die Kupplungsglieder in axialer Richtung auseinandergezogen werden, womit die Verbindung gelöst ist.

Eine Weiterbildung der Erfindung sieht vor, dass das Anschlagelement an einem Stützarm und/oder dem Stützarm vorgesehen ist. Der Stützarm ist dabei dem Rastelement zugeordnet beziehungsweise an diesem befestigt. Das Rastelement weist somit sowohl den Rastarm als auch den Stützarm auf. Sind mehrere Rastarme beziehungsweise Stützarme vorgesehen, so können die Rastarme und Stützarme alternierend vorgesehen sein. Vorzugsweise sind jeweils zwei Rastarme und zwei Stützarme jeweils diametral zueinander vorgesehen. Das Anschlagelement kann sowohl an dem Stützarm als auch an dem Rastarm oder jeweils an beiden angeordnet sein.

Eine Weiterbildung der Erfindung sieht vor, dass der Stützarm Rastmittel aufweist, um zumindest in der Rastarmsicherungsstellung mit dem Rastgegenelement zum hintergreifenden Halten des zweiten Kupplungsglieds zusammenzuwirken. Neben dem Anschlagelement ist also an dem Stützarm das Rastmittel vorgesehen. Das Rastmittel ist, im Gegensatz zu dem Rastarm, jedoch lediglich dazu vorgesehen, das Rastgegenelement zu hintergreifen, um so das zweite Kupplungsglied zu halten, während sich das Rastelement in der Rastarmsicherungsstellung befindet. Liegt das Rastelement dagegen in der Rastarmfreigabestellung vor, so kann es vorgesehen sein, dass das hintergreifende (oder ebenfalls rastende) Halten durch axiales Verlagern der Kupplungsglieder zueinander gelöst werden kann. Dazu können die Rastmittel derart ausgestaltet sein, dass sie bei dem axialen Verlagern in radialer Richtung nach außen federnd ausgelenkt werden, sodass das Rastgegenelement unter ihnen hinwegverlagert werden kann. Liegt das Rastelement dagegen in der Rastarmsicherungsstellung vor, so sind die Rastmittel aufweisenden Stützarme ebenso wie die Rastarme dazu vorgesehen, ein zuverlässiges Halten des zweiten Kupplungsglieds beziehungsweise des Rastgegenelements sicherzustellen. Dabei wird der Stützarm, ebenso wie der Rastarm, bei einem axialen Verlagern der Kupplungsglieder auseinander, wenn sich das Rastelement in der Rastarmsicherungsstellung und nicht in der Rastarmfreigabestellung befindet, derart in Richtung des Rastgegenelements gedrängt, dass die Verbindung der Leitungen beziehungsweise der Kupplungsglieder sichergestellt ist. Zu diesem Zweck kann das Rastmittel beispielsweise mit einer Gleitfläche versehen sein, welche das radiale Verlagern des Stützarms sicherstellt. Die Gleitfläche kann eine Schrägfläche sein und/oder gebogen verlaufen. Durch das gleichzeitige Vorsehen von Rastarm und Stützarm kann die Abstützung des zweiten Kupplungsglieds in Bezug auf das erste Kupplungsglied deutlich verbessert werden. Insbesondere wird auf diese Weise eine Mehrpunktabstützung bei Zugbelastung der Verbindung in axialer Richtung erreicht. Mit Vorteil werden zwei Rastarme und zwei Stützarme an dem Rastelement angeordnet, sodass eine Vierpunktabstützung erreicht wird.

Eine Weiterbildung der Erfindung sieht vor, dass das Trägerelement mindestens ein Haltemittel aufweist, um den Rastarm und/oder die Rastmittel des Stützarms bei Vorliegen der Rastarmsicherungsstellung des Rastelements in der Raststellung zu halten. Das Haltemittel dient insbesondere dazu, den Rastarm und/oder den Stützarm beziehungsweise dessen Rastmittel bei einem axialen Verlagern der Kupplungsglieder auseinander, während das Rastelement in der Rastarmsicherungsstellung vorliegt, den Rastarm beziehungsweise den Stützarm in der Raststellung zu halten beziehungsweise in diese zu drängen und damit das rastende Halten beziehungsweise das rastende Zusammenwirken mit dem Rastgegenelement sicherzustellen. Beispielsweise liegt in der Raststellung zwischen Rastarm und/oder den Rastmitteln und dem Rastgegenelement eine Hintergriffsverbindung - also eine Formschlussverbindung - vor. Mittels der Haltemittel wird verhindert, dass Rastarm beziehungsweise Rastmittel aus dieser heraus in die Trennstellung gelangen können.

Es handelt sich also bei der lösbaren Verbindung um eine selbsthemmende Verbindung, welche vorzugsweise derart ausgestaltet ist, dass bei einem axialen Verlagern der Kupplungsglieder voneinander weg - ohne vorheriges Verlagern des Rastelements in die Rastarmfreigabestellung und Betätigen des Bedienelements - der Rastarm und/oder die Rastmittel des Stützarms in die Raststellung gedrängt werden.

Eine Weiterbildung der Erfindung sieht vor, dass mehrere Rastarme vorgesehen sind, jedem Rastarm ein Bedienelement zugeordnet ist und ausschließlich bei Betätigung mindestens zwei der Bedienelemente die Rastelemente in die Trennstellung bringbar sind. Die Rastarme sind dabei vorzugsweise über einen Umfang des Rastelements verteilt angeordnet. Die beispielsweise an dem Trägerelement vorgesehenen Bedienelemente sind derart den Rastarmen zugeordnet, dass jedes Bedienelement exklusiv auf einen Rastarm wirken kann, insbesondere wenn sich das Rastelement in der Rastarmfreigabestellung befindet. Dabei sind lediglich den Rastarmen, nicht jedoch den Stützarmen die Bedienelemente zugeordnet. Um die Verbindung der beiden Leitungen beziehungsweise Kupplungsglieder zu lösen, ist es nun vorgesehen, dass mindestens zwei der Bedienelemente, vorzugsweise alle Bedienelemente, betätigt werden müssen, um die Rastarme in die Trennstellung zu bringen. Es ist also lediglich dann ein Lösen der Verbindung möglich, wenn sowohl das Rastelement in die Rastarmfreigabestellung verlagert wurde als auch mindestens zwei Bedienelemente betätigt werden. Somit ist ein sehr zuverlässiges und gegen Fehlbedienungen beziehungsweise unbeabsichtigtes Lösen gesichertes System geschaffen.

Eine Weiterbildung der Erfindung sieht vor, dass die Rastarme einander diametral gegenüberliegend angeordnet sind. Eine solche Anordnung ist insbesondere dann vorteilhaft, wenn jedem Rastarm ein Bedienelement zugeordnet ist, da in diesem Fall die dann ebenfalls gegenüberliegend angeordneten Bedienelemente beispielsweise mit Daumen und Zeigefinger mit jeweils entgegengerichteter Krafteinwirkung betätigt werden können. Gleichzeitig ergibt sich durch die diametrale Anordnung der Rastarme eine gleichmäßige Einleitung der Haltekraft der Rastarme und/oder Stützarme auf das Rastgegenelement des zweiten Kupplungsglieds.

Eine Weiterbildung der Erfindung sieht vor, dass das Rastelement buchsenförmig ist und/oder der mindestens eine Rastarm und der mindestens eine Stützarm über den Umfang des Rastelements verteilt angeordnet sind. Buchsenförmig bedeutet hierbei, dass das zweite Kupplungsglied und/oder ein Bereich des Trägerelements in dem Rastelement aufgenommen ist, insbesondere das Rastelement passgenau auf dieses beziehungsweise diesen abgestimmt ist. Das Rastelement kann also im Wesentlichen einen kreisrunden Querschnitt aufweisen und auch - zusammen mit dem Trägerelement - als Führungselement für das zweite Kupplungsglied und/oder das Trägerelement dienen. Wie bereits vorstehend erläutert, sind an dem Rastelement in einer bevorzugten Ausführungsform der Rastarm und der Stützarm vorgesehen, wobei diese über den Umfang des Rastelements verteilt sind. Beispielsweise kann dabei eine gleichmäßige Verteilung vorgesehen und Rastarm und Stützarm jeweils abwechselnd angeordnet sein.

Eine Weiterbildung der Erfindung sieht vor, dass das Bedienelement eine flexible Zunge ist. Die flexible Zunge ist dabei an dem ebenfalls buchsenförmigen Trägerelement befestigt beziehungsweise zusammen mit diesem ausgebildet. Durch eine solche Ausbildung muss das Bedienelement kein zusätzliches Gelenk aufweisen, da es von sich aus eine ausreichende Flexibilität aufweist, um zum Lösen der Verbindung betätigt zu werden und dazu mit dem Rastarm zusammenzuwirken. Die flexible Zunge liegt in Form einer Schwinge vor, weist also vorzugsweise ein freies Ende auf.

Eine Weiterbildung der Erfindung sieht vor, dass der Rastarm und das Rastgegenelement zusammenwirkende Anschlagflächen aufweisen, welche im Wesentlichen senkrecht zu einer Längsachse des ersten und/oder des zweiten Kupplungsglieds stehen. Um ein Herausschieben beziehungsweise Herauspressen des Rastarms aus der Formschlussverbindung mit dem Rastgegenelement zu verhindern, sind die Anschlagflächen vorgesehen. Mit diesen treten Rastarm und Rastgegenelement gegenseitig in Kontakt, um ein Lösen des ersten Kupplungsglieds von dem zweien Kupplungsglied zu verhindern, wenn die Rastarme nicht in der Trennstellung vorliegen. Die senkrechte Anordnung zu der Längsachse der Kupplungsglieder verhindert ein Abgleiten der Anschlagflächen aufeinander, wenn eine axiale Kraft auf die Kupplungsglieder wirkt, um diese auseinanderzutreiben. Gleichzeitig erlaubt die senkrecht angeordnete Anschlagfläche jedoch ein einfaches Lösen der Verbindung, sollte dies beabsichtigt sein. Es muss jedoch ein aktives Lösen der Steckkupplung, also durch Nutzereinfluss, erfolgen. Alternativ kann jedoch auch ein Hinterklammern vorliegen, also die Anschlagsflächen derart geneigt sein, dass der Rastarm auf das Rastgegenelement zugedrängt wird, wenn eine axiale Kraft zum Trennen der Kupplungsglieder vorliegt.

Eine Weiterbildung der Erfindung sieht vor, dass das Trägerelement eine Führungsfläche für das Rastelement aufweist, welche zumindest bereichsweise zwischen dem zweiten Kupplungsglied und dem Rastelement liegt. Die Führungsfläche kann dabei Teil des hülsenförmigen Trägerelements beziehungsweise ein hülsenförmiger Bereich des Trägerelements sein, welcher sowohl das Rastelement führt als auch das zweite Kupplungsglied stützt. Das Rastelement liegt auf der Führungsfläche des Trägerelements auf, wobei der Kontakt zwischen Rastelement und Führungsfläche derart ausgebildet ist, dass ein Verkippen des Rastelements in Bezug auf das Trägerelement weitestgehend verhindert ist. Das Rastelement liegt also mit einer gewissen axialen Erstreckung auf der Führungsfläche auf. Die Führungsfläche ist zwischen dem zweiten Kupplungsglied und dem Rastelement vorgesehen. Das bedeutet, dass das Trägerelement mit einer der Führungsfläche abgewandten Seite mit dem zweiten Kupplungsglied in Kontakt tritt und dieses ebenfalls führt beziehungsweise abstützt, also in radialer Richtung stabilisiert.

Eine Weiterbildung der Erfindung sieht vor, dass an dem Trägerelement, insbesondere an dessen Führungsfläche, eine Lagerstelle für das Rastelement vorliegt. Die Lagerstelle ist beispielsweise ein Drehpunkt, also ein Auflagepunkt, um welchen eine Rotationsbewegung erfolgen kann. An der Lagerstelle liegt das Rastelement derart auf dem Trägerelement beziehungsweise der Führungsfläche auf, dass die Rotationsbewegung - zumindest von Bereichen, insbesondere des Rastarms und/oder des Stützarms - des Rastelements zugelassen ist. Damit soll vor allem eine Rotationsbewegung des Rastarms beziehungsweise des Stützarms ermöglicht werden. Die Rotationsbewegung wird von dem Rastarm beziehungsweise Stützarm bei einem Verlagern in die Trennstellung beschrieben, also dann, wenn das Bedienelement betätigt wird. Dabei stützt sich das Rastelement derart auf die Lagerstelle auf, dass die durch das Verlagern verursachten Kräfte in radialer Richtung von dem Trägerelement aufgenommen werden. Das bedeutet, dass sie nicht auf das zweite Kupplungsglied aufgeprägt werden, was das Auseinanderbewegen der Kupplungsglieder bei einem Lösen der Verbindung erschweren würde. Das Lösen der Verbindung wird also von dem Trägerelement unterstützt, indem radiale Kräfte, die auf das Rastelement beziehungsweise Bereiche davon wirken, von dem Trägerelement aufgenommen und nicht auf eines der Kupplungsglieder übertragen werden.

Eine Weiterbildung der Erfindung sieht vor, dass das Trägerelement ein Eingriffelement aufweist, das radial zwischen dem ersten Kupplungsglied und dem zweiten Kupplungsglied angeordnet ist. Das Eingriffelement liegt dabei zumindest bereisweise über seinen Umfang an dem ersten und/oder zweiten Kupplungsglied an. So kann ein Abstützen eines Kupplungsglieds oder beider Kupplungsglieder erzielt werden, so dass diese vorteilhafterweise gegen ein Verkippen gegeneinander gesichert sind. Mit Hilfe des Eingriffelements kann eine Führung der Kupplungsglieder erzielt werden, die insbesondere ein Verschieben der Kupplungsglieder gegeneinander in axialer Richtung vereinfacht.

Eine Weiterbildung der Erfindung sieht vor, dass das Eingriffelement zum axialen Halten mindestens einer Dichtung ausgebildet ist. Das Eingriffelement greift in einen Zwischenraum ein, der in radialer Richtung zwischen den Kupplungsgliedern vorliegt. An dieser Stelle ist ebenso eine Dichtung angeordnet, um eine dichte Verbindung mittels der Steckkupplung herstellen zu können. Das Eingriffelement ist auf geeignete Weise angeordnet, um ein Herausbewegen der Dichtung aus diesem Zwischenraum zu verhindern. Vorteilhafterweise ist die Dichtung mittels des Eingriffelements in axialer Richtung festgesetzt.

Eine Weiterbildung der Erfindung sieht ein verformbares Basiselement des Rastelements zum im Wesentlichen unabhängigen axialen Verlagern mehrerer Rastarme vor. Normalerweise wird das Rastelement als Einheit axial verlagert, um es in Rastarmsicherungs- oder Rastarmfreigabestellung zu bringen. Wenn die Steckkupplung jedoch derart ausgelegt ist, dass nur eine Betätigung mehrerer Bedienelemente, die jeweils einem Rastarm zugeordnet sind, zum Verlagern der Rastarme in die Trennstellung führt, so sollen die Rastarme im Wesentlichen unabhängig voneinander verlagerbar sein. Auf diese Weise wird erreicht, dass ein Bereich des Rastelements in der Rastarmfreigabestellung vorliegen kann, während sich der andere in der Rastarmsicherungsstellung befindet. Dies wird durch das elastische Verformen des Basiselements erreicht. Wird nun lediglich eines der Bedienelemente betätigt, wenn sich das (gesamte) Rastelement in Rastarmfreigabestellung befindet und versucht, die Kupplungsglieder voneinander zu trennen, so wird der Rastarm, dessen Bedienelement nicht betätigt wurde, von dem Rastgegenelement des zweiten Kupplungsglieds in axialer Richtung "mitgenommen" - insbesondere bedingt durch den Formschluss zwischen dem Rastarm und dem Rastgegenelement - und in eine Stellung gebracht, die er in der Rastarmsicherungsstellung des Rastelements einnehmen würde. Der Rastarm kann somit nicht mehr in seine Trennstellung gelangen, auch wenn nachträglich noch das dazugehörige Bedienelement betätigt würde. Es müssen also stets alle Bedienelemente betätigt werden, wenn sich das Rastelement in der Rastarmfreigabestellung befindet, um die Verbindung zu lösen.

Eine Weiterbildung der Erfindung sieht vor, dass das Bedienelement mit dem Trägerelement und/oder der Rastarm mit dem Rastelement einstückig ausgebildet ist. Es liegt also keine mehrteilige Ausführung vor, insbesondere wird das Bedienelement beziehungsweise der Rastarm nicht nachträglich an dem Trägerelements beziehungsweise dem Rastelement angebracht. Mit Vorteil kann eine materialeinheitliche Ausführung des Bedienelements mit dem Trägerelement beziehungsweise dem Rastarm mit dem Rastelement vorliegen, es kann jedoch auch eine Mehrkomponentenausführung vorteilhaft sein. Somit kann beispielsweise das Trägerelement selbst aus einem vergleichsweise starren Material gefertigt sein, während das Bedienelement flexibel beziehungsweise elastisch ist.

Eine Weiterbildung der Erfindung sieht vor, dass das Rastelement und/oder das Trägerelement aus einem Kunststoff besteht. Eine Fertigung aus Kunststoff ist einfach, schnell und kostengünstig möglich. Gleichzeitig kann ein Kunststoff gewählt werden, welcher die Festigkeitsanforderungen der Steckkupplung erfüllt.

Eine Weiterbildung der Erfindung sieht vor, dass das Rastelement und/oder das Trägerelement ein Spritzteil ist. Beispielsweise können die Elemente mit Hilfe eines Spritzgussverfahrens gefertigt werden. Auch dies erlaubt es, eine schnelle, einfache und kostengünstige Fertigung vorzunehmen.

Eine Weiterbildung der Erfindung sieht vor, dass Trägerelement und/oder Rastelement zumindest bereichsweise in einem Gehäuse, insbesondere aus Kunststoff oder Metall, angeordnet sind. Die vorstehend beschriebene Steckkupplung ermöglicht einen universellen Einbau von Trägerelement und Rastelement in das Gehäuse. Das Gehäuse kann beispielsweise aus Kunststoff bestehen oder auch aus Metall gefertigt sein. Eine Befestigung von Trägerelement und Rastelement an dem Gehäuse kann zum Beispiel durch Verrastung oder einer anderen geeigneten Verbindungstechnik vorgesehen sein.

Eine Weiterbildung der Erfindung sieht vor, dass das Trägerelement und/oder das Gehäuse eine Ausnehmung für das Bedienelement aufweist. Das Bedienelement kann durch die oder in der Ausnehmung derart angeordnet werden, dass es in der Eingriffsstellung mit dem Rastarm zusammenwirken kann, um diesen in die Trennstellung zu bringen. Das Bedienelement muss demzufolge nicht fest an dem Trägerelement oder dem Gehäuse befestigt sein (was der Fall sein kann), sondern wird vielmehr erst dann durch die Ausnehmung zugeführt, wenn ein Verlagern des Rastarms in die Trennstellung - nach dem Verlagern des Rastelements in die Rastarmfreigabestellung - erfolgen soll.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine Schnittansicht eines Rastelements mit Rastarmen und Stützarmen, welche jeweils über ein Anschlagelement und ein Rastmittel verfügen,
- Figur 2: eine Schnittansicht eines Trägerelements zum Halten des Rastelements,
- Figur 3: eine Schnittansicht einer gemeinsamen Anordnung von Trägerelement und Rastelement,
- Figur 4: eine isometrische Darstellung des Rastelements,
- Figur 5: eine Steckkupplung zum Verbinden zweier Leitungen, wobei ein erstes Kupplungsglied und ein zweites Kupplungsglied vorgesehen sind und an dem ersten Kupplungsglied das das Rastelement haltende Trägerelement befestigt ist,
- Figur 6: die Steckkupplung, wobei ein Verbindungsvorgang der Kupplungsglieder dargestellt ist,
- Figur 7: die Steckkupplung, wobei das Rastelement in einer Rastarmsicherungsstellung vorliegt,
- Figur 8: die Steckkupplung, wobei das Rastelement in einer Rastarmfreigabestellung vorliegt und ein Bedienelement des Trägerelements zur Verlagerung des Rastarms in eine Trennstellung betätigt ist,
- Figur 9: die Steckkupplung, wobei sich das Rastelement in der Rastarmfreigabestellung befindet, jedoch lediglich einer der beiden Rastarme betätigt wird, und
- Figur 10: eine Schnittansicht einer um 90° gedrehten Steckkupplung.

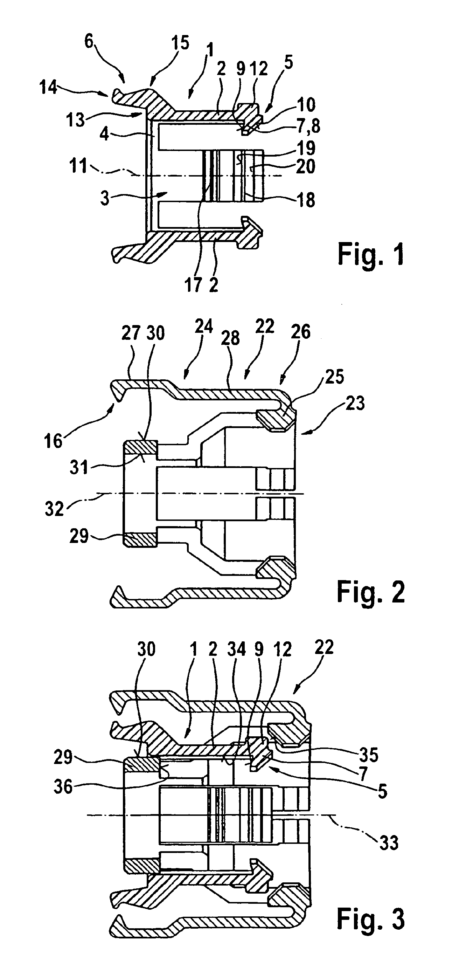

Die Figur 1 zeigt ein Rastelement 1 in einer Schnittdarstellung, welches in dem dargestellten Beispiel über zwei diametral zueinander angeordnete Rastarme 2 und zwei ebenfalls diametral zueinander angeordnete Stützarme 3 verfügt. Die Rastarme 2 und die Stützarme 3 sind an einem ringförmigen Basiselement 4 angeordnet. Dabei ist es vorgesehen, dass sowohl die Rastarme 2 als auch die Stützarme 3 in radialer Richtung zumindest bereichsweise flexibel sind, zumindest aber in Bezug auf das Basiselement 4 elastisch in radialer Richtung auslenkbar sind.

Der Rastarm 2 weist einen Rastbereich 5 und einen Betätigungsbereich 6 auf. Der Rastbereich 5 ist dabei auf der einen Seite (in Figur 1 rechts) des Basiselements 4, der Betätigungsbereich 6 auf der jeweils anderen angeordnet. Durch ein Aufbringen einer Kraft in radialer Richtung auf dem Betätigungsbereich 6 kann - bedingt durch die flexible Befestigung an dem Basiselement 4 - der Rastbereich 5 in die entgegengesetzte Richtung ausgelenkt werden. In der Figur 1 ist erkennbar, dass der Rastarm 2 in seinem Rastbereich 5 ein Rastmittel 7 aufweist, welches als Rastnase 8 ausgebildet ist. Die Rastnase 8 weist auf ihrer einen Seite eine Anschlagfläche 9 und auf ihrer anderen Seite eine Gleitfläche 10 auf. Dabei ist die Anschlagfläche 9 beispielsweise im Wesentlichen senkrecht zu einer Längsachse 11 des Rastelements 1 vorgesehen und zeigt, ausgehend von dem Rastarm 2, radial nach innen. Alternativ kann die Anschlagfläche 9 jedoch auch mit ihrem radial nach innen weisenden Ende in Richtung des Betätigungsbereichs 6 geneigt sein. Die Gleitfläche 10 ist gegenüber der Längsachse 11 schräg angeordnet. Gegenüberliegend von dem Rastmittel 7 ist an dem Rastarm 2 ein Sicherungselement 12 ausgebildet. Das Sicherungselement 12 ist ein im Wesentlichen rechteckiger Vorsprung, welcher radial nach außen zeigt.

Der Bereich, in welchem der Rastarm 2 an dem Basiselement 4 befestigt ist, wird im Folgenden als Lagerstelle 13 bezeichnet, auch wenn dies nur im übertragenen Sinn zu verstehen ist. Der Rastarm 2 kann in Bezug auf das Basiselement 4 angewinkelt werden, beispielsweise wenn in dem Betätigungsbereich 6 die radial nach innen weisende Kraft aufgebracht wird. Das bedeutet, dass der Rastarm 2 selbst derart ausgestaltet sein muss, dass er steif genug ist, um eine Verlagerung des Betätigungsbereichs 6 radial nach innen in eine radial nach außen weisende Verlagerung des Rastbereichs 5 umzusetzen. Dabei wird das Basiselement 4 im Bereich der Lagerstelle 13 elastisch verformt. Um das durch die Kraft auf den Rastarm 2 aufgeprägte Drehmoment übertragen zu können, ist er im Bereich der Lagerstelle 13 vergleichsweise massiv ausgelegt, weist also einen größeren Querschnitt auf, als in restlichen Bereichen. Alternativ können Versteifungsmittel vorgesehen sein.

In dem Betätigungsbereich 6 weist der Rastarm 2 ein Eingriffsgegenelement 14 und einen Abstützbereich 15 auf. Sowohl das Eingriffsgegenelement 14 als auch der Abstützbereich 15 sind in radialer Richtung gegenüber dem dazwischen liegenden Bereich nach außen gerichtet erhöht, sodass ein später beschriebenes Eingriffselement 16 in diesen Bereich eingreifen kann.

An dem Stützarm 3 sind ein Anschlagelement 17 und ein Rastmittel 18 angeordnet. Das Anschlagelement 17 ist in seinem Querschnitt im Wesentlichen rechteckig und weist ausgehend von dem Stützarm 3 radial nach innen. Dabei kann eine nach innen und in Richtung des Rastmittels 7 weisende Kante eine Fase aufweisen, also angeschrägt sein. Das Rastmittel 18 ist hingegen eine ähnlich ausgebildet wie das Rastmittel 7, weist also radial nach innen und besitzt neben einer Anschlagfläche 19 eine dieser abgewandte Gleitfläche 20 und ein radial nach außen weisendes Sicherungselement 21 (hier nicht erkennbar). Im Gegensatz zu der Anschlagfläche 9 des Rastarms 2 ist die Anschlagfläche 19 des Stützarms 3 geneigt und weist dabei mit ihrem radial nach innen gerichteten Ende nicht in Richtung des Betätigungsbereichs 6, sondern in die entgegengesetzte Richtung. Dabei muss die Anschlagfläche 19 keine Ebene sein, sondern kann beispielsweise in ihrem Querschnitt eine Krümmung beziehungsweise einen Radius aufweisen.

Wie in Figur 1 deutlich erkennbar, ist das Rastelement 1 im Wesentlichen buchsenförmig ausgebildet, wobei die Rastarme 2 und die Stützarme 3 radial über den Umfang des Rastelements 1 verteilt angeordnet sind und sich dabei jeweils einander diametral gegenüberliegen.

Die Figur 2 zeigt ein Trägerelement 22 in einer Schnittdarstellung. An einem Grundelement 23 des Trägerelements 22 sind Bedienelemente 24 elastisch auslenkbar angeordnet. Insgesamt sind zwei Bedienelemente 24 vorgesehen, welche sich einander diametral gegenüberliegen. Die Bedienelemente 24 sind an einem Ring 25 des Grundelements 23 derart befestigt, dass sie in einer Lagerstelle 26 elastisch verformbar sind und damit durch eine radial nach innen gerichtete Kraft auf einen Bedienbereich 27 mitsamt dem Eingriffselement 16, welches an dem Bedienelement 24 vorgesehen ist, radial nach innen verlagert werden können. Das Bedienelement 24 ist in diesem Ausführungsbeispiel als flexible Zunge 28 beziehungsweise flexible Schwinge ausgebildet. Das Grundelement 23 des Trägerelements 22 weist überdies eine Hülse 29 auf, welche auf ihrer äußeren Umfangsfläche eine Führungsfläche 30 bildet. Neben der Führungsfläche 30 verfügt die Hülse 29 mit ihrer radial innen liegenden Umfangsfläche über eine Lagerfläche 31. Die Hülse 29 und der Ring 25 sind vorzugsweise durch das Grundelement 23 relativ zueinander positionsfest gehalten, dieser Bereich des Trägerelements 22 ist also vorzugsweise steif ausgelegt. Das Trägerelement 22 ist im Wesentlichen symmetrisch zu seiner Längsachse 32 ausgebildet. Die Hülse 29 bildet mit ihrer Führungsfläche 30 gleichzeitig einen Drehpunkt für das Rastelement 1 beziehungsweise dessen Basiselement 4, wenn auf den Betätigungsbereich 6 die nach innen weisende Kraft zur Verlagerung des Rastbereichs 5 aufgebracht wird.

Figur 3 zeigt eine gemeinsame Schnittdarstellung des Rastelements 1 und des Trägerelements 22, wobei das Rastelement 1 in dem Trägerelement 22 abgestützt ist. Es wird deutlich, dass das Rastelement 1 und das Trägerelement 22 eine gemeinsame Längsachse 33 aufweisen, in welcher die Längsachse 11 und die Längsachse 32 koaxial verlaufen. Das Rastelement 1 ist derart in dem Trägerelement 22 angeordnet, dass es mit einer Lauffläche 34 - die von den Rastarmen 2 und/oder den Stützarmen 3 ausgebildet sein kann - von der Führungsfläche 30 der Hülse 29 abgestützt ist. Das Rastelement 1 ist auf diese Weise in dem Trägerelement 22 verschieblich angeordnet, kann also in Axialrichtung - das heißt in Richtung der Längsachse 33 - verschoben werden. Ein Herausbewegen des Rastelements 1 aus dem Trägerelement 22 ist jedoch nicht möglich. Eine Bewegung des Rastelements 1 aus dem Trägerelement 22 hinaus nach rechts wird verhindert durch ein Zusammenwirken des Sicherungselements 12 und einer Schrägfläche 35, welche an den Ring 25 des Trägerelements 22 vorgesehen ist. Die Schrägfläche 35 ist dabei derart ausgebildet, dass es bei einer weiteren Bewegung des Rastelements 1 nach rechts zu einer radialen Verlagerung des Rastbereichs 5 beziehungsweise des Rastmittels 7 des Rastarms 2 kommt. Dabei wird der Rastarm 2 elastisch verformt. Ein Herausbewegen des Rastelements 1 aus dem Trägerelement 22 nach links wird durch ein Zusammenwirken der Anschlagfläche 9 mit einer Gegenfläche 36 verhindert, welche von einer Stirnfläche des Rings 25 dargestellt wird.

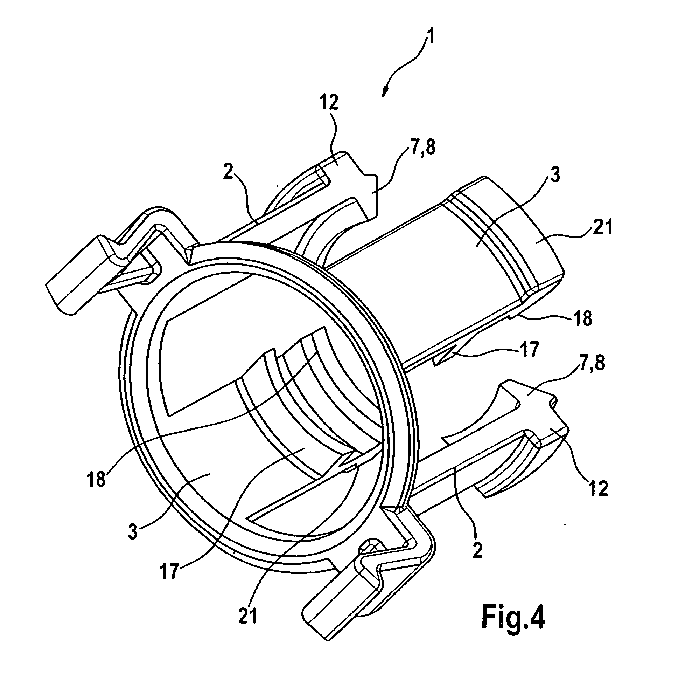

Die Figur 4 zeigt eine isometrische Darstellung des Rastelements 1. Hier ist noch einmal deutlich erkennbar, dass jeweils zwei Rastarme 2 und zwei Stützarme 3 vorgesehen sind, die jeweils einander diametral gegenüberliegen. An den Rastarmen 2 liegt das Rastmittel 7 in Form der Rastnase 8 vor, welches radial nach innen weist, während das Sicherungselement 12 radial nach außen zeigt. An dem Stützarm 3 dagegen ist das Anschlagelement 17, welches in Form einer Rippe vorliegt, sowie das Rastmittel 18 vorgesehen, wobei Anschlagelement 17 und Rastmittel 18 radial nach innen weisen, während das Sicherungselement 21 radial nach außen verläuft. Dabei bilden die Sicherungselemente 12 und die Sicherungselemente 21 einen unterbrochenen Kreisring, weisen also denselben Abstand von den Längsachsen 11, 32 beziehungsweise 33 (hier nicht dargestellt) auf. Auf diese Weise können - wie aus Figur 3 ersichtlich - sowohl die Sicherungselemente 12 als auch die Sicherungselemente 21 mit der Schrägfläche 35 des Trägerelements 22 zusammenwirken, um eine Begrenzung der axialen Bewegung des Rastelements 1 beziehungsweise ein elastisches Verformen der Rastarme 2 radial nach innen zu bewirken.

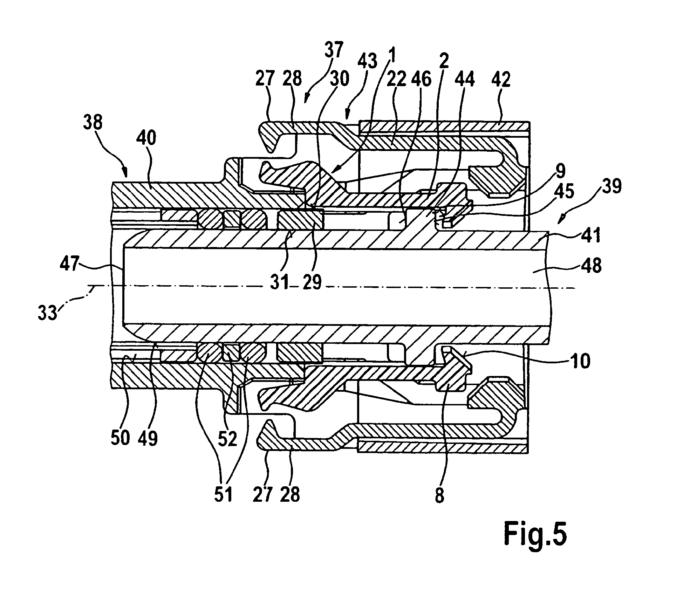

Die Figur 5 zeigt eine Steckkupplung 37 zum lösbaren Verbinden zweier Leitungen 38 und 39. Die erste Leitung 38 ist dabei einem ersten Kupplungsglied 40 und die zweite Leitung einem zweiten Kupplungsglied 41 zugeordnet. An dem ersten Kupplungsglied 40 ist das Trägerelement 22 befestigt, wobei es in einem Gehäuse 42 angeordnet ist, welches Ausnehmungen 43 aufweist, um eine Betätigung des Bedienbereichs 27 der Zungen 28 zu ermöglichen. Die Ausnehmungen 43 sind aus diesem Grund, auch in Umfangsrichtung, lediglich im Bereich der Bedienbereiche 27 ausgebildet. Wie bereits anhand der Figur 3 beschrieben, ist das Rastelement 1 in dem Trägerelement 22 verschieblich angeordnet, wobei es auf der Führungsfläche 30 der Hülse 29 gleitend gelagert ist. Die Hülse 29 dient gleichzeitig als Lagerfläche 31 für das zweite Kupplungsglied 41. Die Hülse 29 umfasst dabei das zweite Kupplungsglied 41 in Umfangsrichtung vollständig. Dies ist insbesondere im Bereich eines Eingriffelements 29' der Hülse 29 der Fall. Dieses Eingriffelement 29' greift in einen radialen Zwischenraum zwischen den Kupplungsgliedern 40 und 41 ein. Auf diese Weise erfolgt ein radiales Führen der Kupplungsglieder 40 und 41 und ein radiales Verschieben und/oder Verkippen der Kupplungsglieder 40 und 41 wird unterbunden, was sowohl die Stabilität als auch die Dichtigkeit der Steckkupplung 37 erhöht.

Das zweite Kupplungsglied 41 weist eine Halterippe 44 auf, welche über eine (vorteilhafterweise ebene) Anschlagfläche 45 verfügt, die mit der (beispielsweise ebenfalls ebenen) Anschlagfläche 9 des Rastarms 2 zusammenwirken kann. Zu diesem Zweck übergreift das Rastmittel 7 beziehungsweise die Rastnase 8 die Halterippe 44 in radialer Richtung derart, dass die Anschlagfläche 9 auf der Anschlagfläche 45 aufliegt. Insbesondere wird dadurch eine eventuell an der Halterippe 44 vorgesehene Rundung oder Fase derart überbrückt, dass das Rastmittel 7 nicht unbeabsichtigt von der Halterippe 44 abgleiten kann. Es soll vielmehr stets ein Formschluss von Rastmittel 7 und Halterippe 44 beziehungsweise den Anschlagflächen 9 und 45 vorliegen. Auf der der Anschlagfläche 45 abgewandten Seite der Halterippe 44 ist eine Aktuatorfläche 46 vorgesehen. Diese arbeitet - was hier nicht erkennbar ist - mit dem Anschlagelement 17 des Stützarms 3 zusammen, um bei einem Verschieben des zweiten Kupplungsglieds 41 in Richtung des ersten Kupplungsglieds 40 ein Verlagern des Rastelements 1 in eben diese Richtung zu bewirken. Das erste Kupplungsglied 40 ist in dem hier dargestellten Ausführungsbeispiel als SAE-Gehäuse ausgeführt. Vorteilhafterweise entsprechen also das erste und/oder das zweite Kupplungsglied 40 und/oder 41 der SAE-Norm.

Um eine zuverlässige Fluidverbindung zwischen einem ersten Fluid führenden Bereich 47 und einem zweiten Fluid führenden Bereich der zweiten Leitung 39 zu erreichen, sind zwischen einer äußeren Umfangsfläche 49 des zweiten Kupplungsglieds 41 und einer inneren Umfangsfläche 50 des ersten Kupplungsglieds 40 ein oder mehrere Dichtungen, beispielsweise in Form von O-Ringen 51, angeordnet. Zwischen den in diesem Ausführungsbeispiel vorgesehenen beiden O-Ringen 51 ist ein Abstandhalter 52 angeordnet, welcher die beiden O-Ringe 51 in axialer Richtung auf einem definierten Mindestabstand hält. Die O-Ringe 51 werden von dem Eingriffelement 29' an ihrer axialen Position gehalten.

Die Steckkupplung 37 ist dazu vorgesehen, die erste Leitung 38 mit der zweiten Leitung 39 lösbar zu verbinden. Zu diesem Zweck wird das zweite Kupplungsglied 41, wie in der Figur 5 gezeigt, in das erste Kupplungsglied 40 eingeschoben, bis die Rastnase 8 beziehungsweise das Rastmittel 7 die Halterippe 44 hintergreift und damit ein rastendes Halten der Halterippe 44 - welche auch als Rastgegenelement bezeichnet werden kann - realisiert. Bei diesem rastenden Halten wirken die Anschlagflächen 9 und 45 beziehungsweise 19 und 45 zusammen.

Um das Einbringen des zweiten Kupplungsglieds 41 und insbesondere der Halterippe 44 in das erste Kupplungsglied 40 zu erleichtern, weist das Rastmittel 7 die Gleitfläche 10 auf. Tritt während des Einbringens des zweiten Kupplungsglieds 41 die Halterippe 44 der Gleitfläche 10 entgegen, so bewirkt diese ein radiales Ausfedern des Rastarms 2 beziehungsweise des Stützarms 3, sodass die Halterippe 44 den Bereich des Rastmittels 7 beziehungsweise 18 durchlaufen kann, wonach Rastarm 2 und Stützarm 3 elastisch in ihre Ausgangsposition zurückfedern und damit das Rastmittel 7 beziehungsweise das Rastmittel 18 die Halterippe 44 hintergreifen und somit eine formschlüssige Hintergriffsverbindung herstellen. Das bedeutet, dass das zweite Kupplungsglied 41 nicht mehr ohne Weiteres aus dem ersten Kupplungsglied 40 herausgezogen werden kann.

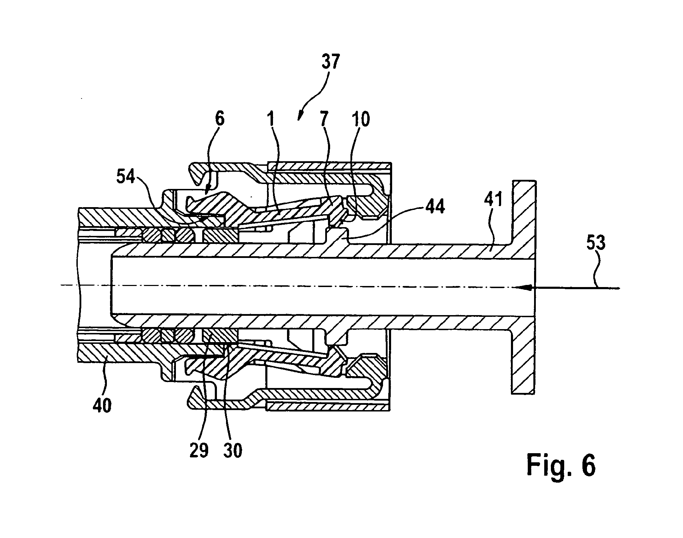

Die Figur 6 verdeutlicht diesen Verbindungsvorgang der Kupplungsglieder 40 und 41 der Steckkupplung 37. Es wird deutlich, dass das zweite Kupplungsglied 41 als Anschlussflansch, beispielsweise an einem Gehäuse vorgesehen ist, während das erste Kupplungsglied 40 beispielsweise einer Schlauchleitung zugehörig ist. Zum Herstellen der lösbaren Verbindung werden die Kupplungsglieder 40 und 41 aufeinander beziehungsweise ineinander geschoben. In dem dargestellten Beispiel wird das zweite Kupplungsglied 41 in das erste Kupplungsglied 40 eingeschoben, was durch den Pfeil 53 verdeutlicht ist.

Dargestellt ist ein Zustand, in welcher die Halterippe 44 durch Zusammenwirken mit der Gleitfläche 10 beziehungsweise der Gleitfläche 20 (letzteres ist hier nicht erkennbar) ein radiales Verlagern des Rastmittels 7 beziehungsweise des Rastmittels 18 bewirkt. Damit kann die Halterippe 44 unter dem Rastmittel 7 beziehungsweise dem Rastmittel 18 hindurch in axialer Richtung verschoben werden. Durch das Zusammenwirken der Halterippe 44 und der Gleitflächen 10 beziehungsweise 20 wird gleichzeitig beziehungsweise vorher das Rastelement 1 in die dargestellte Position verlagert. In dieser Position wird das Rastelement 1 in radialer Richtung durch die Führungsfläche 30 der Hülse 29 gestützt, während eine Ausnehmung 54 des Rastarms 2, welche in radialer Richtung unterhalb des Betätigungsbereichs 6 vorgesehen ist, mit einem Bereich des ersten Kupplungsglieds zusammenwirkt, um ein weiteres axiales Verlagern des Rastelements 1 in Richtung des ersten Kupplungsglieds 40 zu verhindern. In dieser axialen Stellung liegt das Rastelement 1 in einer Rastarmfreigabestellung vor. Dies bedeutet, dass der Rastarm 2 beziehungsweise dessen Rastmittel 7 ohne Weiteres in radialer Richtung nach außen verlagert werden kann, wie dies in der Figur 6 anschaulich dargestellt ist. Dies gilt analog für den Stützarm 3.

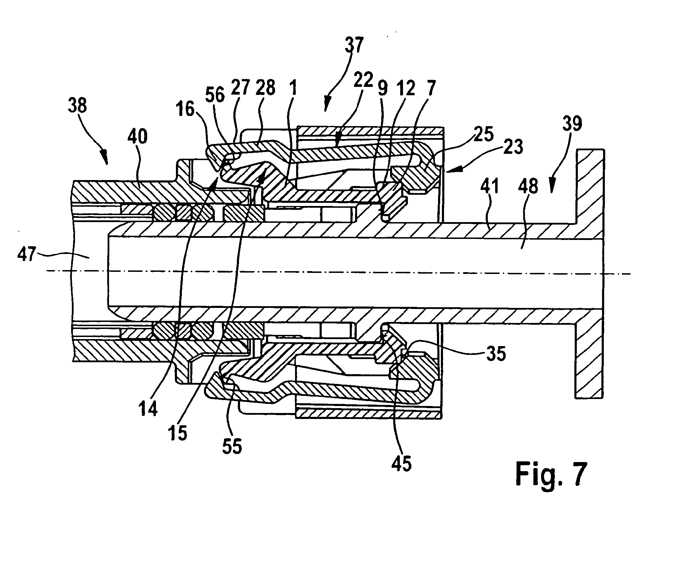

Wird das zweite Kupplungsglied 41 weiter in Richtung des ersten Kupplungsglieds 40 verlagert, so hintergreifen, wie bereits beschrieben, die Rastmittel 7 und 18 die Halterippe 44. Somit ist eine Verbindung zwischen den Kupplungsgliedern 40 und 41 beziehungsweise den Leitungen 38 und 39 hergestellt. Wird nun die mittels der Steckkupplung 37 hergestellte Verbindung in axialer Richtung auf Zug belastet, beispielsweise durch einen in den Fluid führenden Bereichen 47 und 48 vorliegenden Fluiddruck, so wirkt die Anschlagfläche 9 des Rastmittels 7 mit der Anschlagfläche 45 des zweiten Kupplungsglieds 41 zusammen, um das Rastelement 1 in die in Figur 7 dargestellte Axialposition zu verlagern. Diese wird als Rastarmsicherungsstellung bezeichnet. In diesem Zustand tritt das Sicherungselement 12 mit der Schrägfläche 35 in Verbindung und verhindert zum Einen ein weiteres axiales Verlagern des Rastelements 1 und damit auch des zweiten Kupplungsglieds 41 und bewirkt zum Anderen eine Verlagerung des Rastmittels 7 in radialer Richtung nach innen, sodass dieses in Richtung der Halterippe 44 gedrängt wird.

Das rastende Halten der Halterippe 44 durch das Rastmittel 7 beziehungsweise 18 stellt also eine selbsthemmende Verbindung dar. Je größer die Kraft ist, mit welcher das zweite Kupplungsglied 41 in die dem ersten Kupplungsglied 40 abgewandte Richtung bewegt werden soll, umso ausgeprägter liegt das rastende Halten der Halterippe 44 durch das Rastmittel 7 beziehungsweise 18 vor. Der Ring 25 des Grundelements 23 des Trägerelements 22 verhindert also, dass das zweite Kupplungsglied 41 aus dem ersten Kupplungsglied 40 ausgezogen werden kann und somit, dass die Leitungen 38 und 39 voneinander getrennt werden.

An dieser Stelle ist es von Bedeutung festzustellen, dass in der Rastarmsicherungsstellung, die gemäß Figur 7 vorliegt, eine Betätigung des Bedienbereichs 27 des Trägerelements 22 folgenlos bleibt, also kein Lösen der Verbindung der Leitungen 38 und 39 bewirken kann. Es wird diesbezüglich deutlich, dass die Rastarmsicherungsstellung einer Nichteingriffsstellung entspricht, in welcher das Eingriffselement 16 der Zunge 28 nicht in den zwischen Eingriffsgegenelement 14 und Abstützbereich 15 liegenden Bereich des Rastarms 2 eingreifen kann. Vielmehr ist sowohl das Eingriffselement 16 als auch das Eingriffsgegenelement 14 derart ausgestaltet, dass bei der Betätigung des Bedienbereichs 27 das Rastelement 1 weiter in seine Rastarmsicherungsstellung gedrängt wird. Dies wird durch die beiden miteinander wirkenden Schrägflächen 55 und 56 erreicht. Bei einer noch stärkeren Betätigung des Bedienbereichs 27 tritt ein Bereich der Zunge 28 beziehungsweise des Bedienbereichs 27 in Berührkontakt mit dem Abstützbereich 15. In diesem Zustand ist das Rastelement 1 mit seinem Eingriffsgegenelement 14 und dem Abstützbereich 15 zwischen Eingriffselement 16 und einem weiteren Bereich der Zunge 28 in axialer Richtung festgelegt, sodass weder eine Bewegung des Rastelements 1 in Richtung der Rastarmsicherungs- noch in Richtung der Rastarmfreigabestellung erfolgen kann.

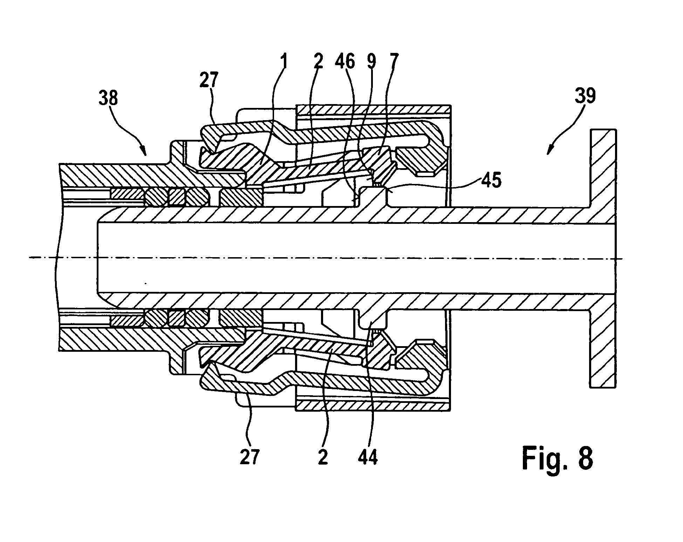

Die Figur 8 verdeutlicht, auf welche Weise die Verbindung der Leitungen 38 und 39 gelöst werden kann. Zunächst muss das Rastelement 1 in die Rastarmfreigabestellung verlagert werden. Dies geschieht, indem das zweite Kupplungsglied 41 in Richtung des ersten Kupplungsglieds 40 verlagert wird. Dabei wirkt die Halterippe 44 beziehungsweise dessen Aktuatorfläche 46 mit dem Anschlagelement 17 des Stützarms 3 zusammen (hier nicht erkennbar), sodass das Rastelement 1 ebenfalls in diese Richtung bewegt wird. Liegt das Rastelement 1 in seiner Rastarmfreigabestellung vor, so können durch eine gleichzeitige Betätigung der beiden gegenüberliegenden Bedienbereiche 27 die Rastarme 2 in eine Trennstellung verlagert werden. In dieser Trennstellung ist das Rastmittel 7 in eine Position gebracht, in welcher die Anschlagfläche 9 nicht mehr mit der Anschlagfläche 45 der Halterippe 44 interagieren kann, sodass diese ohne Weiteres unter dem Rastmittel 7 hindurchbewegt werden kann.

Um die Verbindung der Leitungen 38 und 39 zu lösen, ist es also notwendig, zunächst das Rastelement 1 in seine Rastarmfreigabestellung zu verschieben, und anschließend beide Bedienbereiche 27 gleichzeitig zu betätigen. Wie vorstehend gezeigt, führt ein Betätigen der Bedienbereiche 27 - befindet sich das Rastelement 1 in der Rastarmsicherungsstellung - nicht zu einem Lösen der Verbindung.

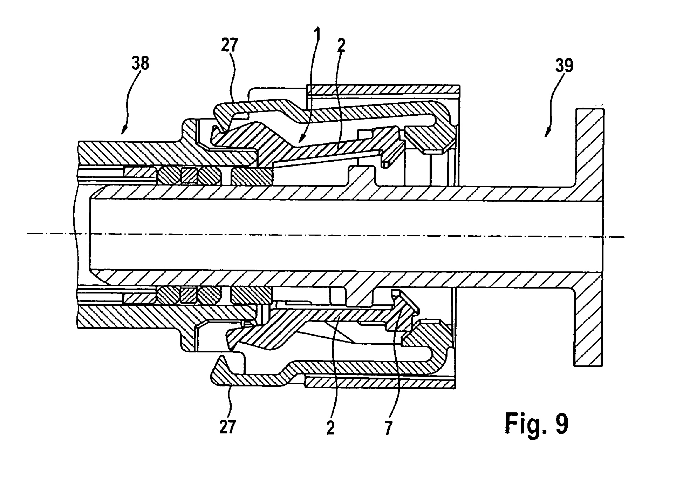

Ebenso wenig kann das Betätigen lediglich eines Bedienbereichs 27 zu einem Lösen der Verbindung führen, was anhand von Figur 9 verdeutlicht wird. In diesem Beispiel wird lediglich der oben dargestellte Bedienbereich 27 betätigt, während der untere unbeeinflusst bleibt. Daraus ergibt sich zwar, da sich das Rastelement 1 vor dem Betätigen des Bedienbereichs 27 in seiner Rastarmfreigabestellung befand, dass der obere Rastarm 2 in die Trennstellung gelangen kann, jedoch wird, sollte versucht werden, das zweite Kupplungsglied 41 aus dem ersten Kupplungsglied 40 herauszuziehen, der untere Rastarm 2, welcher sich nicht in der Trennstellung befindet, in axialer Richtung nach vorne verschoben, sodass sich das Rastelement 1 als Ganzes elastisch verformt. Während der obere Bereich des Rastelements 1 sich noch in der Rastarmfreigabestellung befindet, liegt der untere Bereich in der Rastarmsicherungsstellung vor, wodurch das Rastmittel 7 des unteren Rastarms 2 radial nach innen und damit in Richtung der Halterippe 44 gedrängt wird. Ein Lösen der Verbindung ist auf diese Weise nicht möglich.

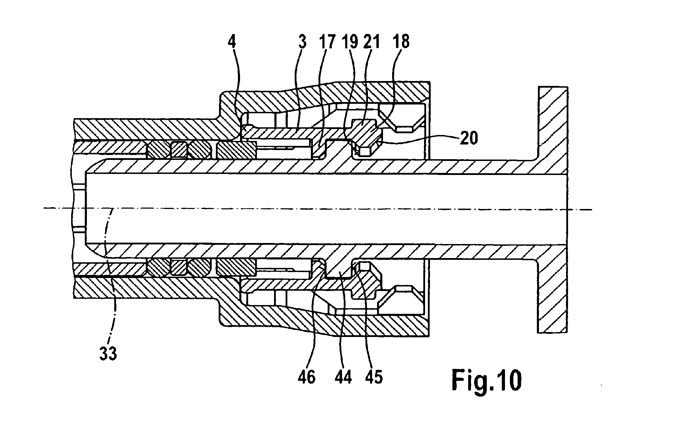

Die Figur 10 verdeutlicht weiterhin die Funktion des Anschlagelements 17, welches an den Stützarmen 3 vorgesehen ist. Es ist gezeigt, dass die Aktuatorfläche 46 der Halterippe 44 mit dem Anschlagelement 17 zusammenwirkt, um das Rastelement 1 in Richtung des ersten Kupplungsglieds 40 axial zu verschieben, wenn das zweite Kupplungsglied 41 in diese Richtung verlagert wird. Es ist auch gezeigt, dass sich das Rastmittel 18 des Stützarms 3 leicht von dem Rastmittel 7 des Rastarms 2 unterscheidet. Auch hier liegt zwar die Anschlagfläche 19, die Gleitfläche 20 und das Sicherungselement 21 vor, jedoch ist die Anschlagfläche 19 hier nicht senkrecht zu der Längsachse 33 vorgesehen. Vielmehr ist sie derart schräg zu dieser angeordnet, dass bei einem axialen Ausziehen des zweiten Kupplungsglieds 41 aus dem ersten Kupplungsglied 40 die Anschlagfläche 45 der Halterippe 44 derart mit der Anschlagfläche 19 interagiert, dass das Rastmittel 18 in radialer Richtung nach außen ausgelenkt wird, wenn das Rastelement 1 in seiner Rastarmfreigabestellung vorliegt.

Dabei kann die Anschlagfläche 19 eine Schrägfläche sein, oder, wie in Figur 10 dargestellt, eine Krümmung beziehungsweise Rundung aufweisen, sodass die Halterippe 44 zum radialen Nachaußenverlagern des Rastmittels 18 mit dieser zusammenwirken kann. Somit halten die Rastmittel 18 der Stützarme 3 die Halterippe 44 lediglich in der Rastarmsicherungsstellung des Rastelements 1. Dies hat den Vorteil, dass zusammen mit den Rastmitteln 7 des Rastarms 2 eine Vierpunktabstützung des zweiten Kupplungsglieds 41 realisiert ist, sodass ein Verkippen der Kupplungsglieder 40 und 41 gegeneinander verhindert wird.

Das Trägerelement 22 ist gleichzeitig dazu ausgebildet, die O-Ringe 51, also die Dichtelemente, auf Position zu halten. Dazu weist es das Eingriffelement 29' auf. Ebenso dient es als Führungselement für das Rastelement 1 in axialer und radialer Richtung und ebenso als Anschlag für das Rastelement 1. Das Rastelement 1 wird dabei auf der Führungsfläche 30 der Hülse 29 des Trägerelements 22 geführt. Der Trägerkörper 22 nimmt somit in der Rastarmfreigabestellung die radialen Kräfte auf, die zum radialen Verlagern der Rastarme 2 in die Trennstellung bewirkt werden, ohne diese Kräfte auf das erste Kupplungsglied 40 zu übertragen, was zu erhöhten Auszugskräften führen, also ein Ausziehen des zweiten Kupplungsglieds 41 aus dem ersten Kupplungsglied 40 erschweren würde. Aus diesem Grund kann das Rastelement 1 aus einem besonders biegeelastischen Werkstoff, beispielsweise Kunststoff, hergestellt werden. Ebenso kann das Rastelement 1 konstruktiv vergleichsweise einfach aufgebaut werden, da keinerlei Versteifungsrippen oder ähnliches vorgesehen werden müssen, um die für das Öffnen der Rastarme 2 beziehungsweise deren Verlagerung in die Trennstellung notwendigen Kräfte zu erzeugen.

## Patentansprüche

1. Steckkupplung (37) zum lösbaren Verbinden zweier Leitungen (38,39), mit einem ersten Kupplungsglied (40), einem zweiten Kupplungsglied (41), einem an dem ersten Kupplungsglied (40) befestigbaren Trägerelement (22) und einem mindestens einen Rastarm (2) aufweisenden, an dem Trägerelement (22) angeordneten Rastelement (1), wobei der Rastarm (2) in einer Raststellung zum rastenden Halten des ein Rastgegenelement (44) aufweisenden zweiten Kupplungsglieds (41) ausgebildet ist und das Rastelement (1) in axialer Richtung zum Einnehmen zumindest einer Rastarmsicherungs- und einer Rastarmfreigabestellung zu dem Trägerelement (22) verschieblich angeordnet ist, **dadurch gekennzeichnet, dass**, insbesondere an dem Trägerelement (22), ein Bedienelement (24) vorgesehen ist, welches bei Betätigung in der Rastarmsicherungsstellung das Rastelement (1) in der Rastarmsicherungsstellung hält, und dass der Rastarm (2) durch Betätigung des Bedienelements (24) in der Rastarmfreigabestellung in eine Trennstellung verlagerbar ist.

2. Steckkupplung nach Anspruch 1, **dadurch gekennzeichnet, dass** die Rastarmfreigabestellung eine Eingriffsstellung, in welcher das Bedienelement (24) mit dem mindestens einen Rastarm (2) zusammenwirkt, und die Rastarmsicherungsstellung eine Nichteingriffsstellung ist.

3. Steckkupplung nach einem der vorhergehenden Ansprüche, **dadurch gekennzeichnet, dass** das Rastelement (1) mindestens ein Anschlagelement (17) aufweist, welches mit dem Rastgegenelement (44) zum Verlagern des Rastelements (1) in Rastarmfreigabestellung zusammenwirkt.

4. Steckkupplung nach Anspruch 3, **dadurch gekennzeichnet, dass** das Anschlagelement (17) an einem Stützarm (3) und/oder dem Rastarm (2) vorgesehen ist.

5. Steckkupplung nach Anspruch 4, **dadurch gekennzeichnet, dass** der Stützarm (3) Rastmittel (18) aufweist, um zumindest in der Rastarmsicherungsstellung mit dem Rastgegenelement (44) zum hintergreifenden Halten des zweiten Kupplungsglieds (41) zusammenzuwirken.

6. Steckkupplung nach einem der vorhergehenden Ansprüche, **dadurch gekennzeichnet, dass** das Trägerelement (22) mindestens ein Haltemittel (25) aufweist, um den Rastarm (2) und/oder die Rastmittel (7) des Stützarms (3) bei Vorliegen der Rastarmsicherungsstellung des Rastelements (1) in der Raststellung zu halten.

7. Steckkupplung nach einem der vorhergehenden Ansprüche, **dadurch gekennzeichnet, dass** mehrere Rastarme (2) vorgesehen sind, jedem Rastarm (2) ein Bedienelement (24) zugeordnet ist und ausschließlich bei Betätigung mindestens zwei der Bedienelemente (24) die Rastarme (2) in die Trennstellung bringbar sind.

8. Steckkupplung nach Anspruch 7, **dadurch gekennzeichnet, dass** die Rastarme (2) einander diametral gegenüberliegend angeordnet sind.

9. Steckkupplung nach einem der vorhergehenden Ansprüche, **dadurch gekennzeichnet, dass** das Rastelement (1) buchsenförmig ist und/oder der mindestens eine Rastarm (2) und der mindestens eine Stützarm (3) über den Umfang des Rastelements (1) verteilt angeordnet sind.

10. Steckkupplung nach einem der vorhergehenden Ansprüche, **dadurch gekennzeichnet, dass** das Bedienelement (24) eine flexible Zunge (28) ist.

11. Steckkupplung nach einem der vorhergehenden Ansprüche, **dadurch gekennzeichnet, dass** der Rastarm (2) und das Rastgegenelement (44) zusammenwirkende Anschlagflächen (9,45) aufweisen, welche im Wesentlichen senkrecht zu einer Längsachse (11,32,33) des ersten und/oder des zweiten Kupplungsglieds (40,41) steht.

12. Steckkupplung nach einem der vorhergehenden Ansprüche, **dadurch gekennzeichnet, dass** das Trägerelement (22) eine Führungsfläche (30) für das Rastelement (1) aufweist, welche zumindest bereichsweise zwischen dem zweiten Kupplungsglied (41) und dem Rastelement (1) liegt.

13. Steckkupplung nach Anspruch 12, **dadurch gekennzeichnet, dass** an dem Trägerelement (22), insbesondere an dessen Führungsfläche (30), eine Lagerstelle für das Rastelement (1) vorliegt.

14. Steckkupplung nach einem der vorhergehenden Ansprüche, **dadurch gekennzeichnet, dass** das Trägerelement (22) ein Eingriffelement (29') aufweist, das radial zwischen dem ersten Kupplungsglied (40) und dem zweiten Kupplungsglied (41) angeordnet ist.

15. Steckkupplung nach Anspruch 14, **dadurch gekennzeichnet, dass** das Eingriffelement (29') zum axialen Halten mindestens einer Dichtung (51) ausgebildet ist.

16. Steckkupplung nach einem der vorhergehenden Ansprüche, **gekennzeichnet durch** ein verformbares Basiselement (4) des Rastelements (1) zum im Wesentlichen unabhängigen axialen Verlagern mehrerer Rastarme (2).

17. Steckkupplung nach einem der vorhergehenden Ansprüche, **dadurch gekennzeichnet, dass** das Bedienelement (24) mit dem Trägerelement (22) und/oder der Rastarm (2) mit dem Rastelement (1) einstückig ausgebildet ist.

18. Steckkupplung nach einem der vorhergehenden Ansprüche, **dadurch gekennzeichnet, dass** das Rastelement (1) und/oder das Trägerelement (22) aus einem Kunststoff besteht.

19. Steckkupplung nach einem der vorhergehenden Ansprüche, **dadurch gekennzeichnet, dass** das Rastelement (1) und/oder das Trägerelement (22) ein Spritzteil ist.

20. Steckkupplung nach einem der vorhergehenden Ansprüche, **dadurch gekennzeichnet, dass** das Trägerelement (22) und/oder Rastelement (1) zumindest bereichsweise in einem Gehäuse (42), insbesondere aus Kunststoff oder Metall angeordnet sind.

21. Steckkupplung nach Anspruch 20, **dadurch gekennzeichnet, dass** das Trägerelement (22) und/oder das Gehäuse (42) eine Ausnehmung (43) für das Bedienelement (24) aufweist.

## Claims

1. A plug-in coupling (37) for releasably connecting two lines (38,39), with a first coupling member (40), a second coupling member (41), a carrier element (22) which can be fastened to the first coupling member (40), and a latching element (1), which has at least one latching arm (2) and is arranged on the carrier element (22), wherein, in a latching position, the latching arm (2) is designed for the latching holding of the second coupling member (41) having a latching mating element (44), and the latching element (1) is arranged displaceably in the axial direction so as to take up at least one latching arm securing position and one latching arm release position in relation to the carrier element (22), **characterized in that** in particular on the carrier element (22) an operation element (24) is provided, which upon actuating in the latching arm securing position holding the latching element (1) in the latching arm securing position and that the operation element (24) can be actuated in the latching arm release position in order to shift the latching arm (2) into a separating position.

2. The plug-in coupling as claimed in claim 1, **characterized in that** the latching arm release position is an engagement position in which the operating element (24) interacts with the at least one latching arm (2), and the latching arm securing position is a non-engagement position.

3. The plug-in coupling as claimed in one of the preceding claims, **characterized in that** the latching element (1) has at least one stop element (17) which interacts with the latching mating element (44) in order to shift the latching element (1) into the latching arm release position.

4. The plug-in coupling as claimed in claim 3, **characterized in that** the stop element (17) is provided on a supporting arm (3) and/or the latching arm (2).

5. The plug-in coupling as claimed in claim 4, **characterized in that** the supporting arm (3) has latching means (18) in order, at least in the latching arm securing position, to interact with the latching mating element (44) in order to hold the second coupling member (41) by engaging therebehind.

6. The plug-in coupling as claimed in one of the preceding claims, **characterized in that** the carrier element (22) has at least one holding means (25) in order to hold the latching arm (2) and/or the latching means (7) of the supporting arm (3) in the latching position when the latching element (1) is in the latching arm securing position.

7. The plug-in coupling as claimed in one of the preceding claims, **characterized in that** a plurality of latching arms (2) are provided, each latching arm (2) is assigned an operating element (24) and the latching arms (2) can be brought into the separating position only when at least two of the operating elements (24) are actuated.

8. The plug-in coupling as claimed in claim 7, **characterized in that** the latching arms (2) are arranged lying diametrically opposite one another.

9. The plug-in coupling as claimed in one of the preceding claims, **characterized in that** the latching element (1) is in the form of a bushing, and/or the at least one latching arm (2) and the at least one supporting arm (3) are distributed over the circumference of the latching element (1).

10. The plug-in coupling as claimed in one of the preceding claims, **characterized in that** the operating element (24) is a flexible tongue (28).

11. The plug-in coupling as claimed in one of the preceding claims, **characterized in that** the latching arm (2) and the latching mating element (44) have interacting stop surfaces (9,45) which is substantially perpendicular to a longitudinal axis (11,32,33) of the first and/or the second coupling member (40,41).

12. The plug-in coupling as claimed in one of the preceding claims, **characterized in that** the carrier element (22) has a guide surface (30) for the latching element (1), at least regions of which guide surface lie between the second coupling member (41) and the latching element (1).

13. The plug-in coupling as claimed in claim 12, **characterized in that** there is a bearing point for the latching element (1) on the carrier element (22), in particular on the guide surface (30) thereof.

14. The plug-in coupling as claimed in one of the preceding claims, **characterized in that** the carrier element (22) has an engagement element (29') which is arranged radially between the first coupling member (40) and the second coupling member (41).

15. The plug-in coupling as claimed in claim 14, **characterized in that** the engagement element (29') is designed for the axial holding of at least one seal (51).

16. The plug-in coupling as claimed in one of the preceding claims, **characterized by** a deformable base element (4) of the latching element (1) for the substantially independent axial shifting of a plurality of latching arms (2).

17. The plug-in coupling as claimed in one of the preceding claims, **characterized in that** the operating element (24) is formed integrally with the carrier element (22), and/or the latching arm (2) is formed integrally with the latching element (1).

18. The plug-in coupling as claimed in one of the preceding claims, **characterized in that** the latching element (1) and/or the carrier element (22) are/is composed of a plastic.

19. The plug-in coupling as claimed in one of the preceding claims, **characterized in that** the latching element (1) and/or the carrier element (22) are/is an injection molded part.

20. The plug-in coupling as claimed in one of the preceding claims, **characterized in that** the carrier element (22) and/or latching element (1) are/is arranged at least in regions in a housing (42), in particular of plastic or metal.

21. The plug-in coupling as claimed in claim 20, **characterized in that** the carrier element (22) and/or the housing (42) have/has a recess (43) for the operating element (24).

## Revendications

1. Raccord enfichable (37) pour la connexion amovible de deux conduites (38, 39), comprenant un premier élément de raccord (40), un second élément de raccord (41), un élément support (22) pouvant être fixé au premier élément de raccord (40) et un élément d'encliquetage (1) présentant au moins un bras d'encliquetage (2), disposé sur l'élément support (22), dans lequel le bras d'encliquetage (2) est réalisé dans une position d'encliquetage pour le maintien par encliquetage du second élément de raccord (41) présentant un élément conjugué d'encliquetage (44) et l'élément d'encliquetage (1) est disposé dans la direction axiale pour l'adoption d'au moins une position de fixation de bras d'encliquetage et d'une position de libération de bras d'encliquetage de manière coulissante par rapport à l'élément support (22), **caractérisé en ce qu'**un élément de commande (24) est prévu notamment sur l'élément support (22), lequel maintient l'élément d'encliquetage (1) dans la position de fixation de bras d'encliquetage lors de l'actionnement dans la position de fixation de bras d'encliquetage et que le bras d'encliquetage (2) peut être déplacé dans une position de séparation par actionnement de l'élément de commande (24) dans la position de libération de bras d'encliquetage.

2. Raccord enfichable selon la revendication 1, **caractérisé en ce que** la position de libération de bras d'encliquetage est une position d'engagement dans laquelle l'élément de commande (24) coopère avec l'au moins un bras d'encliquetage (2) et la position de fixation de bras d'encliquetage est une position de non engagement.

3. Raccord enfichable selon l'une quelconque des revendications précédentes, **caractérisé en ce que** l'élément d'encliquetage (1) présente au moins un élément de butée (17) qui coopère avec l'élément conjugué d'encliquetage (44) pour le déplacement de l'élément d'encliquetage (1) dans la position de libération de bras d'encliquetage.

4. Raccord enfichable selon la revendication 3, **caractérisé en ce que** l'élément de butée (17) est prévu sur un bras d'appui (3) et/ou le bras d'encliquetage (2).

5. Raccord enfichable selon la revendication 4, **caractérisé en ce que** le bras d'appui (3) présente des moyens d'encliquetage (18) pour coopérer au moins dans la position de fixation de bras d'encliquetage avec l'élément conjugué d'encliquetage (44) pour le maintien par engrènement du second élément de raccord (41).

6. Raccord enfichable selon l'une quelconque des revendications précédentes, **caractérisé en ce que** l'élément support (22) présente au moins un moyen de maintien (25) pour maintenir dans la positon d'encliquetage le bras d'encliquetage (2) et/ou les moyens d'encliquetage (7) du bras d'appui (3) en cas de présence de la position de fixation de bras d'encliquetage de l'élément d'encliquetage (1).

7. Raccord enfichable selon l'une quelconque des revendications précédentes, **caractérisé en ce que** plusieurs bras d'encliquetage (2) sont prévus, un élément de commande (24) est associé à chaque bras d'encliquetage (2) et les bras d'encliquetage (2) peuvent être amenés dans la position de séparation exclusivement lors de l'actionnement d'au moins deux des éléments de commande (24).

8. Raccord enfichable selon la revendication 7, **caractérisé en ce que** les bras d'encliquetage (2) sont disposés de manière diamétralement opposée l'un à l'autre.

9. Raccord enfichable selon l'une quelconque des revendications précédentes, **caractérisé en ce que** l'élément d'encliquetage (1) est en forme de douille et/ou l'au moins un bras d'encliquetage (2) et l'au moins un bras d'appui (3) sont disposés de manière répartie sur la périphérie de l'élément d'encliquetage (1).

10. Raccord enfichable selon l'une quelconque des revendications précédentes, **caractérisé en ce que** l'élément de commande (24) est une languette flexible (28).

11. Raccord enfichable selon l'une quelconque des revendications précédentes, **caractérisé en ce que** le bras d'encliquetage (2) et l'élément conjugué d'encliquetage (44) présentent des surfaces de butée (9, 45) qui coopèrent et se situent essentiellement perpendiculairement à un axe longitudinal (11, 32, 33) du premier et/ou du second élément de raccord (40, 41).

12. Raccord enfichable selon l'une quelconque des revendications précédentes, **caractérisé en ce que** l'élément support (22) présente une surface de guidage (30) pour l'élément d'encliquetage (1) qui se situe au moins par région entre le second élément de raccord (41) et l'élément d'encliquetage (1).

13. Raccord enfichable selon la revendication 12, **caractérisé en ce qu'**un point d'appui pour l'élément d'encliquetage (1) est présent sur l'élément support (22), notamment sur sa surface de guidage (30).

14. Raccord enfichable selon l'une quelconque des revendications précédentes, **caractérisé en ce que** l'élément support (22) présente un élément d'engagement (29') qui est disposé radialement entre le premier élément de raccord (40) et le second élément de raccord (41).

15. Raccord enfichable selon la revendication 14, **caractérisé en ce que** l'élément d'engagement (29') est réalisé pour le maintien axial d'au moins un joint (51).

16. Raccord enfichable selon l'une quelconque des revendications précédentes, **caractérisé par** un élément de base déformable (4) de l'élément d'encliquetage (1) pour le déplacement axial essentiellement indépendant de plusieurs bras d'encliquetage (2).

17. Raccord enfichable selon l'une quelconque des revendications précédentes, **caractérisé en ce que** l'élément de commande (24) est réalisé d'une pièce avec l'élément support (22) et/ou le bras d'encliquetage (2) avec l'élément d'encliquetage (1).

18. Raccord enfichable selon l'une quelconque des revendications précédentes, **caractérisé en ce que** l'élément d'encliquetage (1) et/ou l'élément support (22) se compose d'un plastique.

19. Raccord enfichable selon l'une quelconque des revendications précédentes, **caractérisé en ce que** l'élément d'encliquetage (1) et/ou l'élément support (22) est une pièce moulée par injection.

20. Raccord enfichable selon l'une quelconque des revendications précédentes, **caractérisé en ce que** l'élément support (22) et/ou l'élément d'encliquetage (1) sont disposés au moins par région dans un logement (42), notamment en plastique ou métal.

21. Raccord enfichable selon la revendication 20, **caractérisé en ce que** l'élément support (22) et/ou le logement (42) présente un évidement (43) pour l'élément de commande (24).
